# EUROPEAN PATENT APPLICATION

(11) **EP 1 657 640 A1**
(43) Date of publication of application: **17.05.2006**
(21) Application number: 04105731.6
(22) Date of filing: 12.11.2004
(51) Int. Cl.: G06F 9/54

(54) **Method and computer system for queue processing**

(71) Applicant: SAP AG, 69190 Walldorf (DE)
(72) Inventor: MUELLER, Wolfgang, 69168, Wiesloch (DE); WILLY, Hartmut, 69168, Wiesloch (DE)
(74) Representative: Rocke, Carsten

(57) **Abstract**

A scheduler (100) is configured to process messages of at least one of a plurality of computer systems in a further computer system of the plurality of computer systems. The scheduler receives a first message from one of the plurality of computer systems and registers the first message in a first queue (Q1). Then, the scheduler receives a second message (302) from one of the plurality of computer systems. The second message has a logical dependency on the first message. The second message is registered in a second queue (Q2) and in the first queue (Q1), wherein the queue entry (302-1) of the second message (302) in the first queue (Q1) occurs after the queue entry (301-1) of the first message in the first queue (Q1). The scheduler identifies the logical dependency of the second message on the first message by the order of the corresponding queue entries in the first queue and finally releases the first message for processing before releasing the second message according to the logical dependency.

## Description

### Field of the Invention

The present invention generally relates to electronic data processing, and more particularly, relates to methods, computer program products and systems for queue processing.

### Background of the Invention

Schedulers being computer programs that coordinate the use of shared resources are known in the art. Typically, schedulers put jobs or messages to be scheduled for execution at a later point in time into a queue. A queue is a data structure in which elements are removed in the same order they were entered. This is often also referred to as FIFO (first in, first out).
For example, SAP AG uses a queue scheduler as a component of its integration technology for processing message queues in its Supply Chain Management product. The queue scheduler is configured to support the replication of messages on a first system into a second system by making sure that the order of messages is respected when processing the messages in the second system.
The queue scheduler can handle multiple queues to enable parallel processing of messages. Parallel processing becomes important when high quantities of messages need to be processed.
Messages can have logical dependencies. For example, a message for creating a customer order can trigger a first queue entry for the order and a further queue entry for an associated material that is used by the order. A second message for a second customer order may trigger an entry for the second order in a further queue. In case the second order uses the same material as the first order a further queue entry for the same material is generated, which implies a logical dependency between the first and second message.
The queue scheduler reads queue information from a database, where all queue information is stored when a message triggers a queue entry. By using such a pull based approach, the queue scheduler only knows the queue status at the point in time when the last database read was performed. The latest messages often are not known by the scheduler although being queued already in the database. Further, the queue scheduler can only process those messages that can be processed without dependency knowledge (typically the oldest queue entries). This procedure makes the scheduler slow especially in the case of many parallel queues. A dependency can block the processing of messages even when they are queued in different queues. This may cause the queue scheduler to discard the blocked messages to free memory and reread these messages at a later point in time. As a consequence, it is difficult to use the scheduler in scenarios that require real-time queue replication between different systems.

### Summary of the Invention

In one aspect of the invention the problem of real-time message synchronization across a plurality of computer systems is solved by the features of the independent claims.
A scheduler computer program product is configured to process messages of at least one of a plurality of computer systems in a further computer system of the plurality of computer systems. The scheduler receives a first message from one of the plurality of computer systems and registers the first message in a first queue. Then, the scheduler receives a second message from one of the plurality of computer systems. The second message has a logical dependency on the first message. The second message is registered in a second queue and in the first queue, wherein the queue entry of the second message in the first queue occurs after the queue entry of the first message in the first queue. The scheduler identifies the logical dependency of the second message on the first message by the order of the corresponding queue entries in the first queue and finally releases the first message for processing before releasing the second message according to the logical dependency.
The scheduler can guarantee that the processing of messages that originate in a plurality of computer systems is performed by always respecting logical dependencies between the various messages. This guarantees data consistency across multiple computer systems.
The aspects of the invention will be realized and attained by means of the elements and combinations particularly pointed out in the appended claims. It is to be understood that both the foregoing general description and the following detailed description are exemplary and explanatory only and are not restrictive of the invention as described.

### Brief Description of the Drawings

FIG. 1 is a simplified block diagram of a computer system network for queue processing;
FIG. 2 shows a scheduler queuing a first message;
FIG. 3 shows the scheduler queuing a second message;
FIGs. 4 and 5 show the scheduler resolving a message dependency;
FIGs. 6 to 10 show a further example where the scheduler resolves dependencies for four messages;
FIG. 11 illustrates a topological sorting algorithm for message dependency resolution;
FIG. 12 shows an alternative embodiment of the invention including persisting means for messages;
FIGs. 13A, 13B show a simplified flow chart of a first method according to one embodiment of the invention including a recovery mechanism of the scheduler;
FIGs. 14A, 14B show a simplified flow chart of a second method according to an alternative embodiment of the invention including a recovery mechanism of the scheduler.

### Detailed Description of the Invention

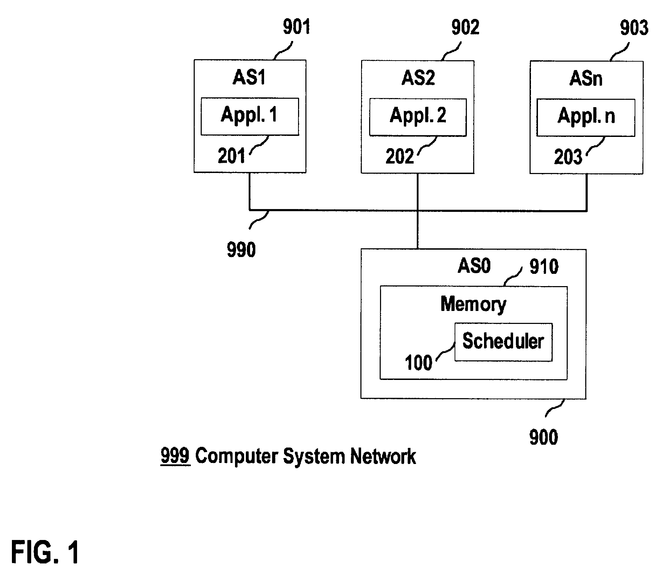

FIG. 1 is a simplified block diagram of a computer system network 999 for queue processing. The computer system network 999 includes a first, second and third computer system 901, 902, 903 for running application systems AS1, AS2 and AS3, respectively. In the example, the first application system AS1 has at least a first application 201, the second application system AS2 has at least a second application 202 and the third application system AS3 has at least a third application ASn. Any number of computer systems may be included in the network 999. Each application system can have a deliberate number of applications.
The computer system network 999 further includes a further computer system 900 for running a further application system AS0. A scheduler 100 computer program is stored in a memory 910 of the further computer system 900. The scheduler 100 has instructions that can be executed by one or more processors of the further computer system 900. The scheduler can queue messages received from the other computer systems in the computer system network 999 in such a way that all messages are processed by the further application system AS0 always in the correct order even when logical dependencies exist between various messages.
The queues of the scheduler 100 can be real time replications of message queues generated in the various application systems.
It is also possible that one computer system runs multiple application systems. In this case the messages may also originate inside the further computer system 900.
The computer systems can communicate with each other over a network 990. In the case of multiple applications systems running within a single computer system the communication via network 990 can be replaced by a shared memory communication within the computer system. In software, the term shared memory refers to memory that is accessible by more than one process, where a process is a running instance of a program. In this context, shared memory is used to facilitate interprocess communication.

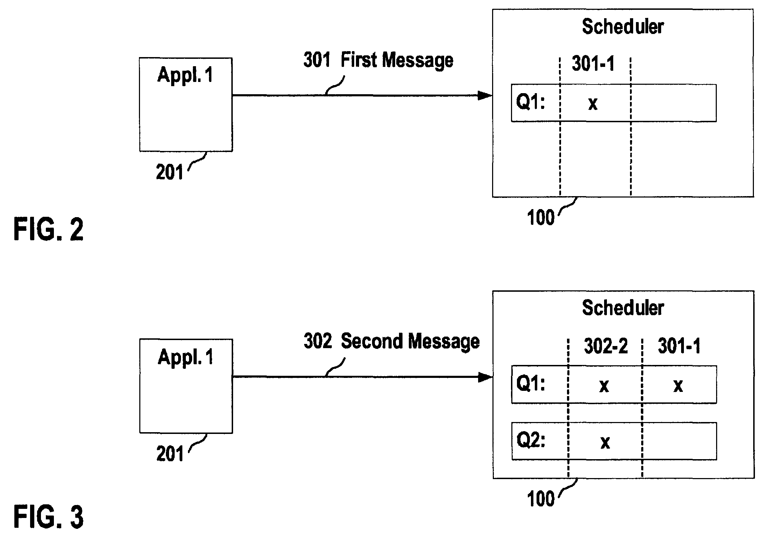

FIGs. 2 to 5 shown an example where the scheduler 100 handles two messages having a logical dependency. A fundamental difference to the prior art scheduler is that the scheduler 100 does not rely on a pull mechanism. Instead of actively pulling queue information from a database, the scheduler gets notified by the application systems by sending messages directly to the scheduler 100. This way the scheduler 100 can trigger the execution of messages in the receiving application system shortly after the generation of the message in the sending application system. That is, only a short time elapses between message generation and execution so that the message replication does not become a bottleneck of the computer system with respect to message processing.

In FIG. 2, the scheduler 100 receives a first message 301 from an application 201 that is run on the first computer system 901. The first message can also originate in the system that is running the scheduler 100. However in the following example it is assumed that the message originates in another system. For example, the message corresponds to a transaction for creating a customer order in the first computer system 901. The executed transaction can thus be regarded as the message creator. For consistency reasons, the customer order has also to be created in the further computer system 900 running the scheduler 100.
Then, the scheduler registers the first message 301 in a first queue Q1. In the example, this could be a queue for queuing customer orders. Each registration entry of a specific message in a queue is illustrated by an 'x' in a column for the respective message. The column is illustrated by dotted lines and has a header with the message name 301-1.
For example, the queues can be stored in a memory portion of the further computer system's memory 910.
In case the first message 301 is queued in the first computer system 901 the registration of the first message 301 in the first queue Q1 of the scheduler 100 corresponds to a replication of the corresponding queue in the first computer system 901. In other words, in one implementation the first computer system 901 may run its own local scheduler, which queues the messages originating in the first computer system. The local scheduler can be responsible for controlling the order in which messages are sent to the scheduler 100. In this implementation the scheduler 100 can be considered as a central scheduler, which receives and queues messages from applications to replicate the queues from at least one corresponding local scheduler.

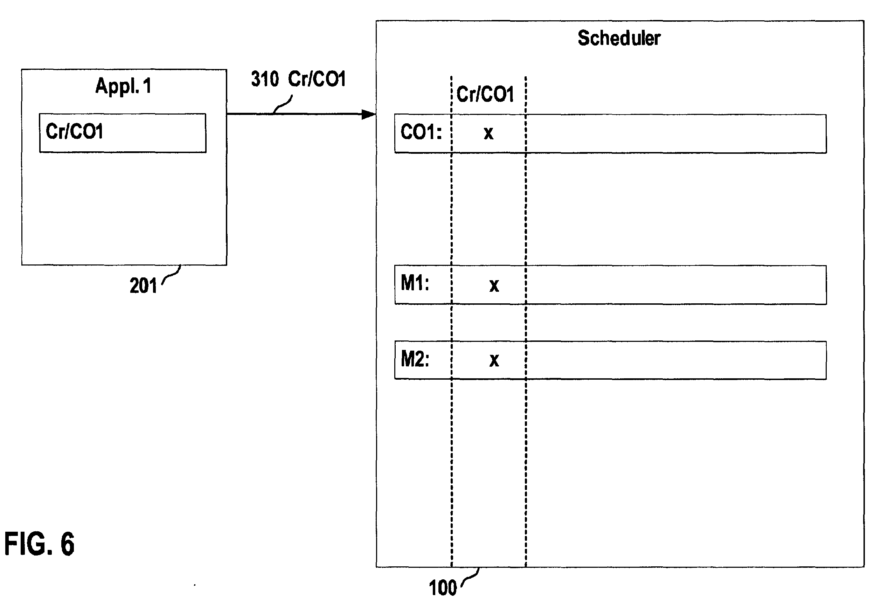

In FIG. 3, the scheduler 100 receives a second message 302 from the application 201 that is executed on the first computer system 901. In general, the second message can originate also from another application run by the same or another computer system. For example, the message corresponds to a transaction for delivering the customer order created by the first message 301. The second message 302 has a logical dependency on the first message 301. A logical dependency between messages can originate in that both messages affect the same object (e.g., customer order). In general, the second message can have dependent objects that are affected by executing the second message. For example, when the delivery of the customer order is executed, the status of the customer order is modified (e.g., status = delivered). That is, the second message 302 affects the object (customer order) that also is subject to the first message 301. It is clear that the status of the customer order cannot be modified before the customer order has been created. Therefore, a logical dependency between the two messages exists implying that the first message 301 has to executed before the second message 302 in any case.
The scheduler 100 then registers the second message 302 in a second queue Q2 and in the first queue Q1, wherein the queue entry 302-2 of the second message 302 in the first queue Q1 occurs after the queue entry 301-1 of the first message 301 in the first queue Q1. In general, the second message is registered on all queues of the scheduler 100 that relate to dependent objects of the second message. In other words, the second message is registered on all queues that relate to an object affected (e.g., modified) through the message. In real application systems, a message can affect many objects leading to broad dependencies.
The second queue Q2 can be a queue for queuing deliveries whereas the registration of the second message 302 in the first queue 301 indicates the logical dependency on the first message 301 that has been registered before in the same queue.
The scheduler 100 can identify the logical dependency of the second message 302 on the first message 301 by the order of the corresponding queue entries 301-1, 302-2 in the first queue Q1. In case of an application system that uses a plurality of processors for achieving parallelisation to handle high message volumes hundreds of queues and broad dependencies may exist. The example shown in FIGs. 6 to 11 discloses how to identify logical dependencies in such an environment.

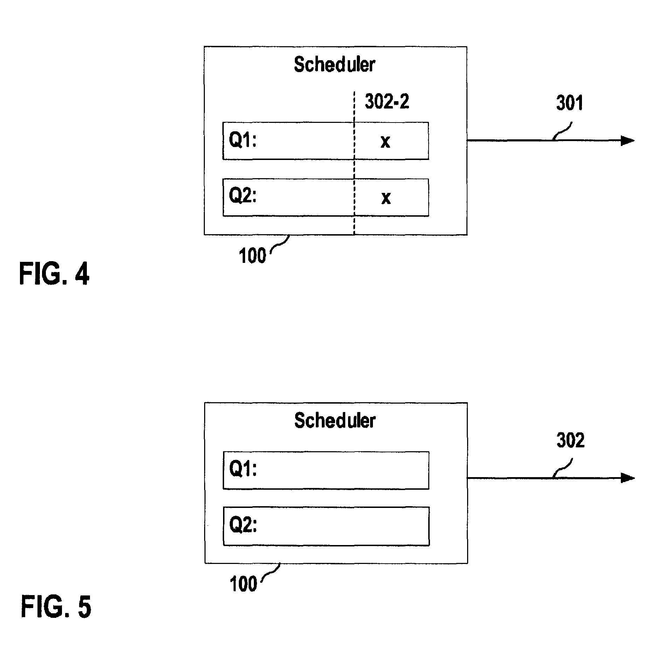

Once the scheduler 100 has recognized the dependency, the first message 301 can immediately be processed because it is not dependent on any previous message. Therefore, the scheduler 100 releases the first message 301 for processing and deletes the queue entries related to the first message 301 as illustrated by FIG. 4.
After the deletion, the remaining queue entries 302-2 of the second message 302 in the first and second queues Q1, Q2 have no dependency any more on a previous message.

Therefore, as shown in FIG. 5, the second message 302 can now be processed. The scheduler 100 releases the second message for processing and deletes the queue entries related to the second message 302 after the second message 302 was successfully executed.
The above described procedure ensures that the first message 301 is processed before the second message 302 according to the logical dependency and data consistency in the further computer system 900 is guaranteed.

FIGs. 6-10 illustrate a further example with multiple logically dependent and independent messages. The example is based on messages originating in a first application system. However, the messages processed by scheduler 100 can originate in multiple application systems. Also the described logical dependencies between messages can exist between messages originating from different application systems.

In FIG. 6, a first transaction Cr/CO1 is executed by the first application 201 on the first computer system 901. For example, the transaction creates a first customer order CO1. This customer order can be put into a corresponding queue of a local scheduler (not shown) of the first computer system 901.
In case the queue entry needs to be replicated to the further computer system 900, a corresponding first message 310 is sent to the scheduler 100 of the further computer system 900, for example, by the local scheduler of the first computer system 901. The local scheduler of the first computer system 901 can be implemented with the same functionality as the central scheduler 100. This corresponds to a special implementation where the system generating the message is also the system running the scheduler (e.g., further computer system 900).
For example, the first computer system 901 may run a first application system AS1 (e.g., an Enterprise Resource Planning system or a Customer Relationship Management system) and, for example, the further computer system 900 may run a planning and simulation system or any other application system that has to take into account all customer orders and related data from other application systems for planning purposes.
In the example of FIG. 6, the first message registers itself in three queues (CO1, M1, M2).
The registration of the first message 310 in queue CO1 implies that the customer order CO1 has to be created in the further computer system 900. The registration in queues M1 and M2 implies that for the fulfilment of customer order CO1 the materials M1 and M2 are needed and, for example, corresponding material movements have to be taken into account by the planning and simulation system.
When the scheduler 100 receives the first message 310, the scheduler 100 can provide a unique timestamp to the message 310 according to which the message is registered in the queues CO1, M1 and M2. The timestamp can be implemented by a counter or any other means that shows a strictly monotonic behaviour over time and allows to assign a unique value to each received message.

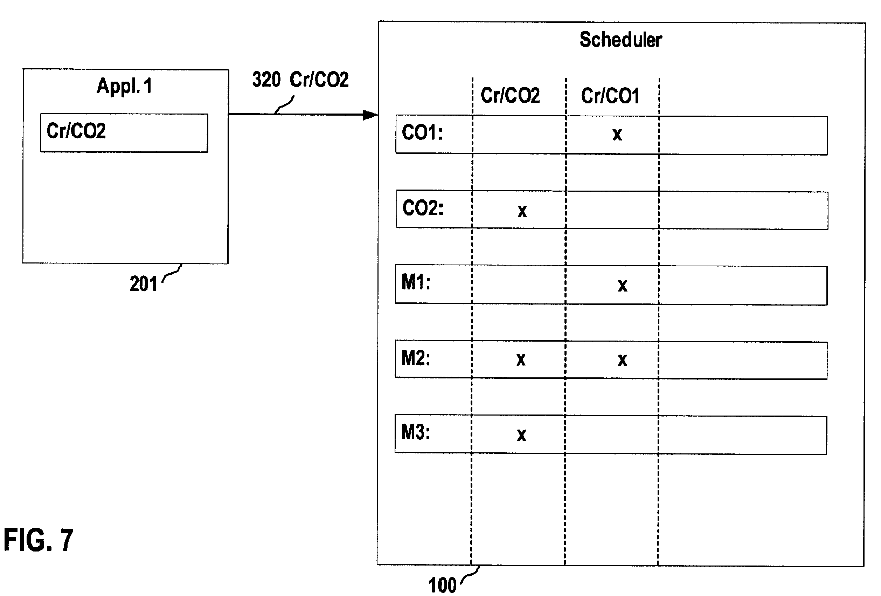

In FIG. 7, a second transaction Cr/CO2 is executed by the first application 201 on the first computer system 901. For example, the transaction creates a second customer order CO2.
A corresponding second message 320 is sent to the further computer system 900, where it is received by a scheduler 100. When the scheduler 100 receives the second message 320, the scheduler 100 provides a unique timestamp to the second message 320.
The second message 320 registers itself in corresponding queues of the scheduler 100 according to the timestamp. That is, in case the second message requires registration in the same queue as the first message, the timestamp clearly indicates, that the queue entry of the second message occurs after the queue entry of the first message.
In the example of FIG. 7, the registration of the second message 320 occurs for the queues CO2, M2 and M3. The registration of the second message 320 in queue CO2 implies that the customer order CO2 has to be created in the further computer system 900. In general, the creation of CO1 and CO2 could occur in parallel because the corresponding messages are registered in different customer order queues (e.g., queues CO1, CO2). However, the registration of the second message 320 in queues M2 and M3 implies that for the fulfilment of customer order CO2 the materials M2 and M3 are needed and, for example, corresponding material movements have to be taken into account by the planning and simulation system. Because CO1 also uses material M2, there is a logical dependency of the second message 320 on the first message 310. The customer order CO2 related to the second message 320 may not be created before the customer order CO1 related to the first message 310 because both customer orders use the same material M2. For example, if the customer order CO1 uses all of the available material M2, then customer order CO2 cannot be scheduled for immediate production because the required material M2 would not be available.
If the scheduler 100 would not respect the logical dependency between the messages by releasing the creation of the second order CO2 in parallel with the creation of the first order CO1, the system could end up in an undetermined state.

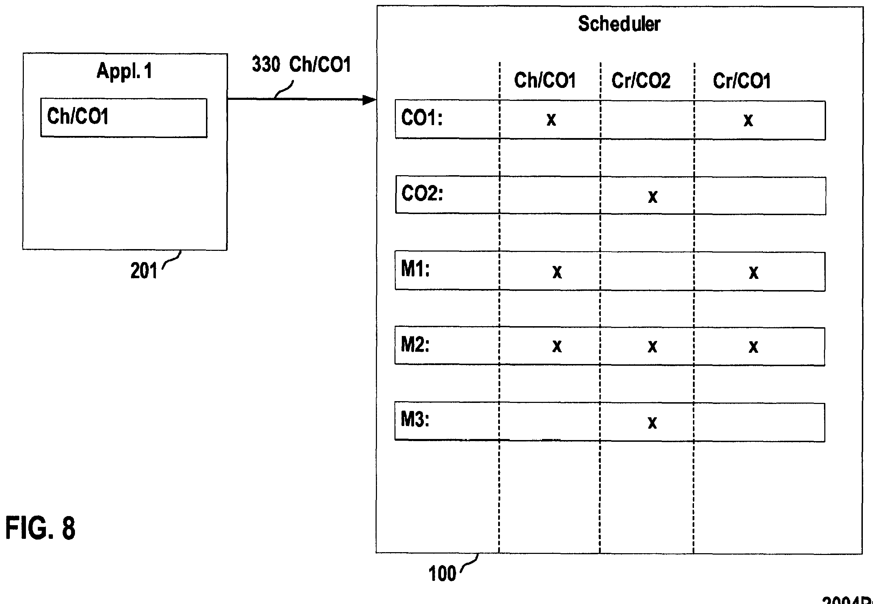

In FIG. 8, a third transaction Ch/CO1 is executed by the first application 201 on the first computer system 901. For example, the transaction changes the first customer order CO1 by changing the number of ordered items.
A corresponding third message 330 is sent to the further computer system 900. When the scheduler 100 receives the third message 330, the scheduler 100 provides a unique timestamp to the third message 330.
The third message 330 registers itself in corresponding queues of the scheduler 100 according to the timestamp after the second message 320.
In the example of FIG. 8, the registration of the third message 320 occurs for the queues CO1, M1 and M2. The registration of the second message 330 in queue CO1 implies a logical dependency on the first message 310 expressing that the customer order CO1 hast first to be created before it can be changed.

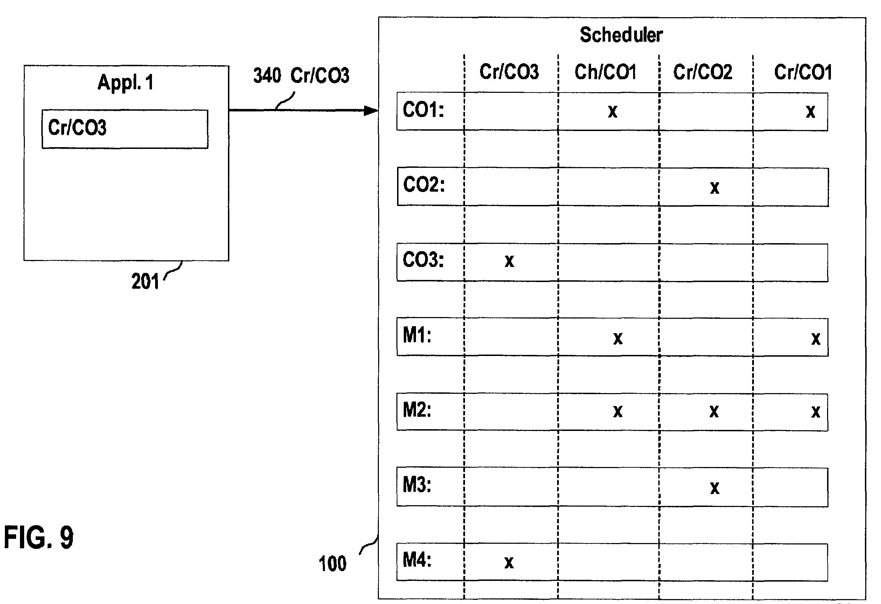

In FIG. 9, a forth transaction Cr/CO3 is executed by the first application 201 on the first computer system 901. For example, the transaction creates a third customer order CO3.
A corresponding forth message 340 is sent to the further computer system 900. When the scheduler 100 receives the forth message 340, the scheduler 100 provides a unique timestamp to the forth message 340.
The forth message 340 registers itself in corresponding queues of the scheduler 100 according to the timestamp after the third message 330.
In the example of FIG. 9, the registration of the forth message 340 occurs for the queues CO3 and M4. There are no queue entries from previous messages in these queues. That, is the forth message 340 has no logical dependency on any of the previous messages.

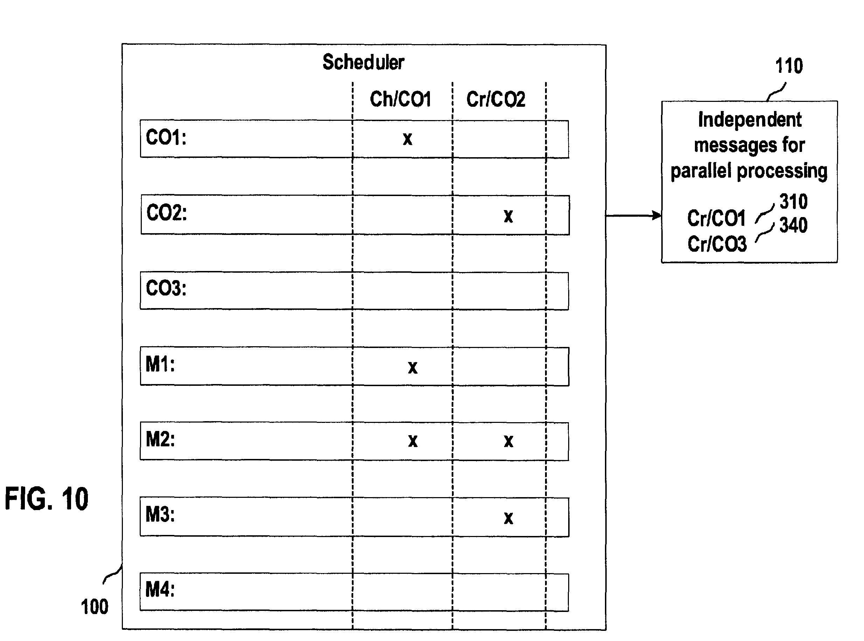

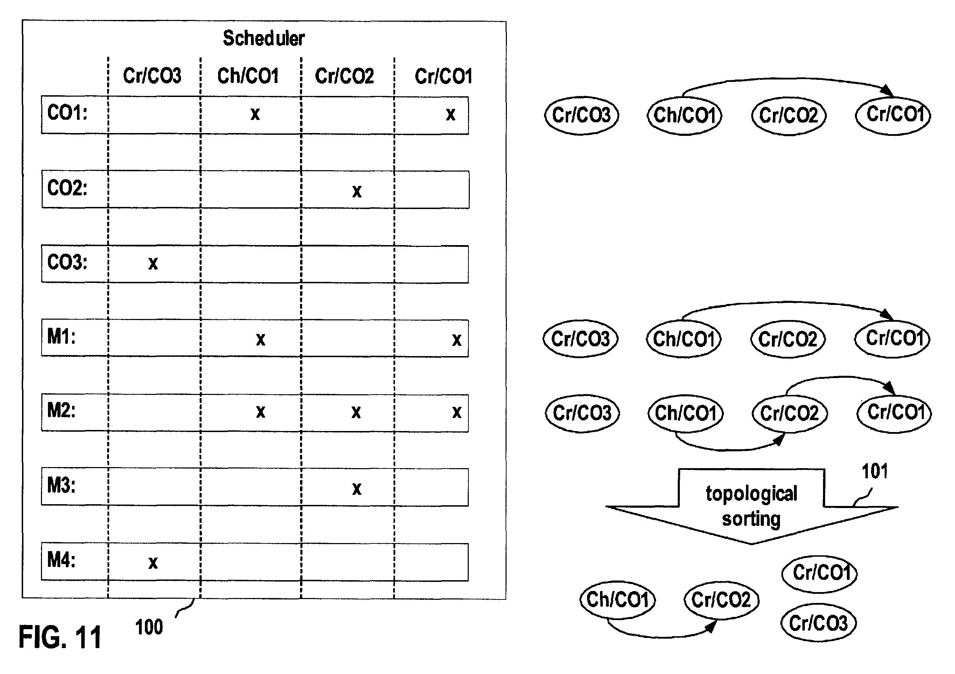

FIG. 10 shows the scheduler 100 after having resolved a logical dependency in the queues CO1, CO2, CO3, M1, M2, M3 and M4.
In the example of FIG. 10 the scheduler has applied a logical dependency resolution algorithm to the queues in the scheduler as of FIG. 9. The scheduler has identified all messages without logical dependencies. These messages 310, 340 can, therefore, be processed immediately. For example, the scheduler can put the identified independent messages into a corresponding pool of independent messages 110. Potentially, all messages in this pool 110 can be processed in parallel. Once the independent messages 310, 340 are listed in the pool 110, the corresponding queue entries in the scheduler 100 are removed.
The pool 110 can be implemented in the memory 910 of the further computer system 900 by any data structure suitable to store a plurality of messages.
For example, the scheduler can use a topological sorting algorithm for resolving the logical dependencies in the various queues. A topological sorting algorithm is explained in detail in FIG. 11.

FIG. 11 shows the result of the logical dependency resolution by using a topological sorting algorithm 101.
A topological sort is a partial sorting of elements. The result list is not necessary fully sorted. However, certain rules between the elements of the list (e.g., logical dependencies) have to be respected by the sorting algorithm.
The logical dependencies expressed in the order of queue entries define limiting rules for the algorithm. That is, if two messages are registered in the same queue, as it is the case for the queues CO1, M1 and M2, the topological sort algorithm 101 knows that the message having the older timestamp has always to be processed before the message with the younger timestamp.
On the right hand of FIG. 11 for those queues having dependent queue entries the queue elements are shown as directed graphs, where each queue entry is represented by a node of the directed graph and the logical dependencies between the nodes are illustrated by arrows.
When the sorting algorithm evaluates logical dependencies of a specific message, it analyses all queues where the message has registered. For example, when analysing the third message 330 (Ch/CO1), the queues CO1, M1 and M2 are analysed to determine the logical dependencies. In queues CO1 and M1, dependencies on the first message 310 (Cr/CO1) are determined. In queue M2, a dependency on the second message 320 (Cr/CO2) is determined. As a consequence, the third message 330 cannot be processed before the second message 320.
When this algorithm is applied to all messages that have registered in the scheduler 100 the result is that the first and forth messages 310, 340 (Cr/CO1, Cr/CO3) have no dependencies and, therefore, can be immediately processed. Whereas the second and third messages 320, 330 have to wait in the queue. For example, the independent messages are listed in the pool 110 as described in FIG. 10.

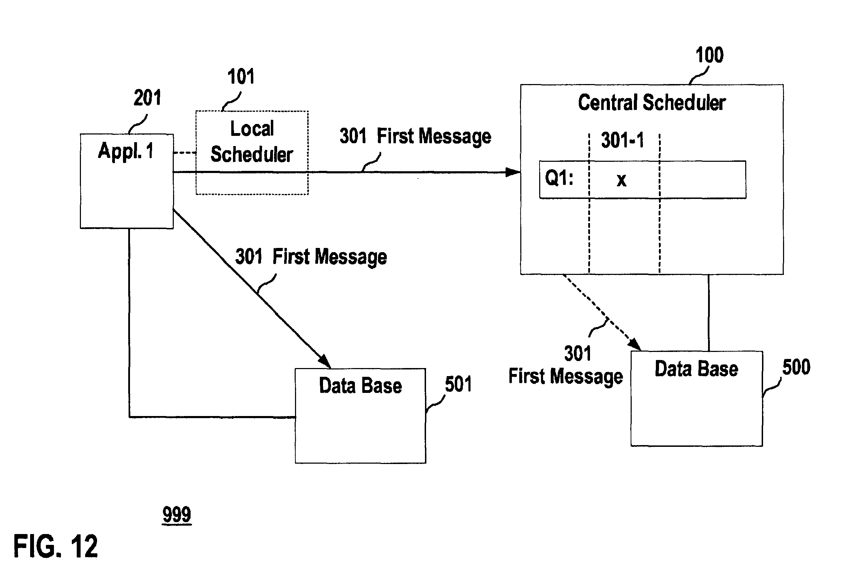

FIG. 12 shows an alternative embodiment of the invention.
In the examples of FIGs. 2-10 all queue information of the scheduler 100 is stored in the memory 910. In case the scheduler 100 crashes for any reason or the further computer system 900 suffers a break down, the queue information would be lost causing inconsistencies with queues in other computer systems of the computer system network 999.
To overcome this problem, a message (e.g., first message 301) that is sent to the scheduler 100 from any application (e.g., first application 201) may also be persisted in persisting means, such as, for example, a local database 501. That is, in case of a crash or a communication failure of the sending system the message is also sent to the local database 501 and is stored in the local database 501.
In case of successfully sending the message to the remote system the message is persisted in the local database of the receiving system. In case the scheduler 100 crashes it can reload the queue information after its restart from the database 500 into the memory 910. This is advantageous with respect to transactional security in application systems because the restart mechanism avoids a loss of messages.
As described previously, in one implementation, the scheduler (e.g., local scheduler 101) can be responsible for queuing messages of one computer system 901. For example, the local scheduler 101 is an optional component in the first computer system 901. The local scheduler 101 is interfaced to the first application 201 in the first computer system 901 and is illustrated by a dashed box.
In another implementation, the scheduler can be responsible for queuing messages of a plurality of computer systems in a network (e.g., central scheduler 100). In this case, the various computer systems 900, 901, 902, 903 are declared at the central scheduler 100. The declaration of the various computer systems makes the local systems known to the central scheduler 100. The declaration may include information about the destination and/or the interface to be used for remote calls from the central scheduler 100 into the local systems.
When, after a period of temporary non-availability, the central scheduler 100 is available again it still knows the local computer systems that can be relevant for queue reconciliation.
In one embodiment, the local systems may have local schedulers (e.g., local scheduler 101). For example, a message that is created in a local computer system 901 may register itself at the corresponding local scheduler 101 of the local system 901. The registration may occur synchronously at the local scheduler 101 providing to the local scheduler all information that is needed to guarantee the correct order of execution. For example, this information can include all queue identifiers of queues that the message depends on. Additional information may be registered, such as, information for authority-checks, login-information, shortcuts for execution, etc. The additional information may be used for a remote login allowing the central scheduler 100 to execute a message in a corresponding local system. The local scheduler 101 may provide a timestamp to the message. The timestamp functionality can be implemented as a counter or as a value of any function that is strictly monotonic over time. Alternatively, the timestamp may be provided by a central time stamping service in the computer network 990.
The message can then be persisted in the local database 501 associated with the local system 901 where it was created.
When, for example, the central scheduler 100 is not available over a specific time interval because of, for example, a break down or network problems, the local schedulers may resend messages that were generated during the specific time interval to the central scheduler 100 once it is available again. For example, a message can include a unique identifier, which allows the central scheduler 100 to recognise whether the message was already sent or not in case the message is resent.
In another embodiment, the central scheduler 100 may retrieve persisted messages directly from the persistence means (e.g., database 501) once the central scheduler 100 becomes available again by, for example, using remote function calls.
Once a message is persisted, the transaction that generated the message may notify the central scheduler 100 that the message has been persisted. In case the central scheduler 100 is not available, the local scheduler 101 may be notified. Only then a message can be executed.
In case such a notification gets lost, for example, a timeout may specify, when the scheduler has to look for persisted messages. Any persisted message is valid because only the notification got lost but the corresponding transaction has been executed. If a transaction is not executed correctly, a rollback may have occurred and no message gets persisted.
Each local system 901, 902, 903 may have the same availability as the corresponding local scheduler. In this case, the local system is started and stopped together with its local scheduler.
In a further implementation, a message that is created in a local system 901 may be sent together with the registration information to the central scheduler 100. In this case, the central scheduler 100 adds a timestamp and the message data (e.g., first message 301) is persisted (dashed arrow) in a database 500 associated with the computer system 900 running the central scheduler 100. Then, the central scheduler 100 returns control to the local system 901 that generated the message.
When, after the specific time interval of non-availability, the central scheduler 100 becomes available again, persisted messages are read in the order of their timestamps from the storage locations where the messages had been persisted. Timestamps which were not provided by the central scheduler 100 but created in a local system at a time when the central scheduler 100 was unavailable may either be transformed to central scheduler timestamps (e.g., by calculating the time difference between the systems) or may be replaced by a new valid central scheduler timestamp at the time of the message transfer.
During a restart of the central scheduler 100, messages that are read in from the persistence database(s) can be executed and new messages can already be registered. At the time when all persisted but not yet executed messages have been read from the persistence database(s), the central scheduler 100 is again in sync with the local systems.

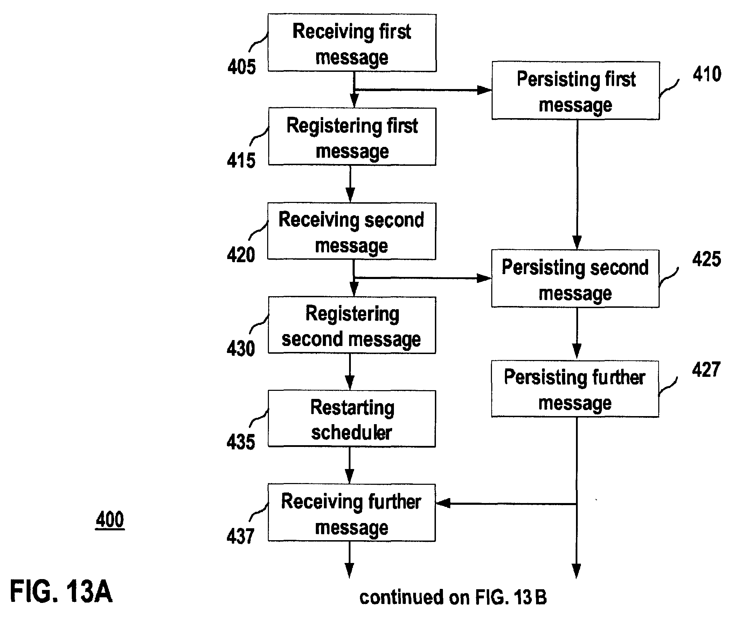

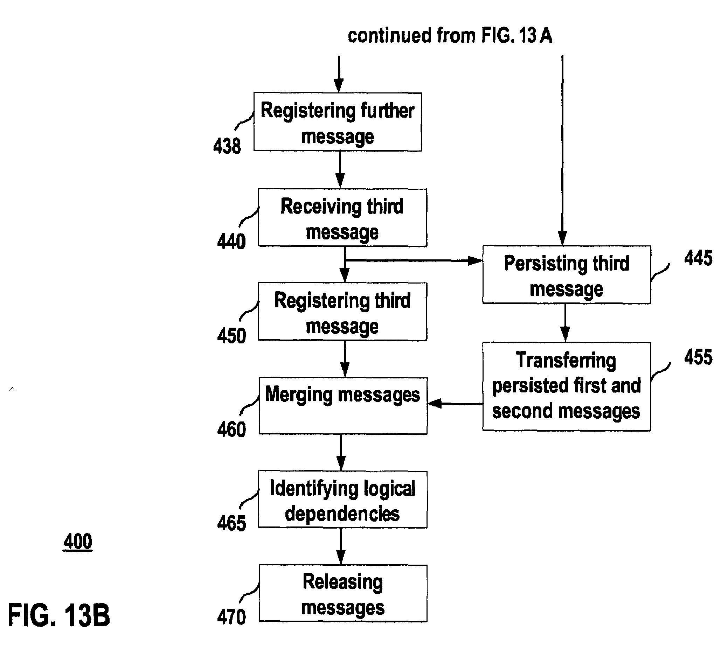

FIGs. 13A and 13B illustrate a flowchart of a first method 400 describing in detail message queuing with a dependency resolution mechanism of the scheduler 100 in case of a loss of queue data in the memory 910 or in case of a network malfunction. FIG. 13A shows the first portion of the flow chart and FIG. 13B the second portion.
The central scheduler 100 receives 405 and registers 415 the first message. Then the central scheduler 100 receives 420 and registers 430 the second message. The messages may have been created by corresponding transactions of the first application 201. Advantageously, before the messages are registered in the corresponding queues of the central scheduler 100, they are persisted 410, 425 in persisting means as described under FIG. 12. For example, the persistence may occur in the associated local database 501 or in the database 500. A message stays in the persistence means until the message is finally executed. Then, the central scheduler 100 notifies the corresponding persistence means (e.g., local database 501) to remove the executed message. It is assumed that, after having registered the second message, the central scheduler 100 becomes unavailable either because of a system crash or a memory malfunction or because of network problems.
A local system (e.g., the first computer system 901) may continue to generate messages while the central scheduler 100 is unavailable. For example, the first application 201 generates a further message while the central scheduler 100 is down and, therefore, unavailable to register the message.
In a first implementation the local scheduler 101 resends the further message to the central scheduler 100 until the central scheduler 100 becomes available again after its restart 435. Then the further message is finally received 437 by the central scheduler 100 and gets registered 438 in the corresponding queues. The further message may be persisted 427 in the local database 501 before the central scheduler 100 is restarted 435. Alternatively, the message may be persisted 427 in the database 500 that is associated with the central scheduler 100 after the further message has been received 437. Further, the first and second messages are transferred 455 to the central scheduler 100 in case they got discarded from the memory 910. In case of a network interruption, the first and second messages may still reside in the memory 910 and a transfer from the persistence means may not be necessary. The transferred messages get registered in the corresponding queues of the central scheduler 100 according to their original timestamps. In other words, the central scheduler 100 merges 460 the transferred messages with other messages, such as, for example, the third message that has been received 440 and registered 450 since the central scheduler's restart 435.

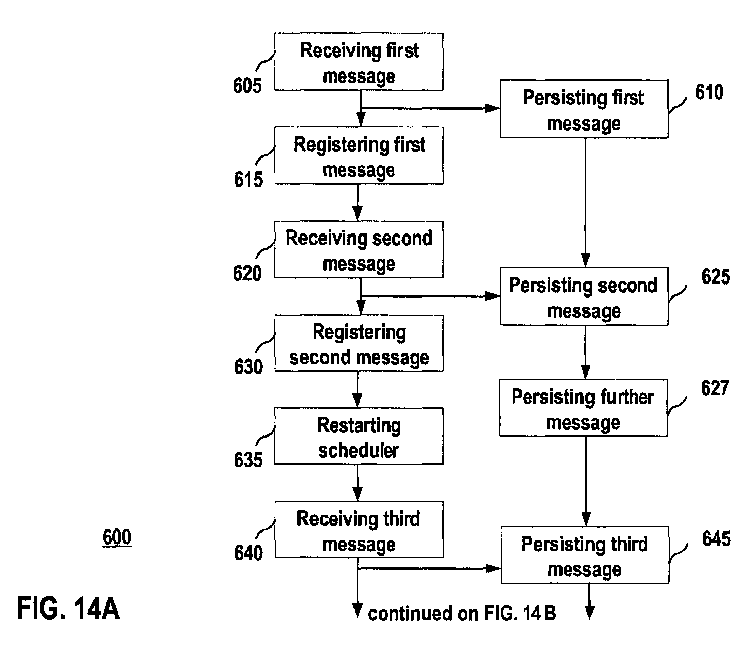

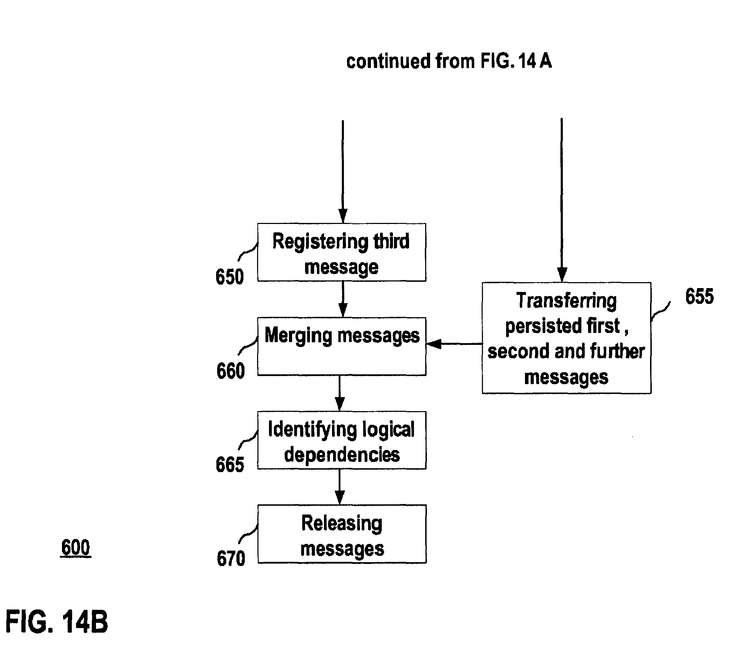

FIGs. 14A and 14B show a simplified flow chart of an alternative second method 600, where the steps 605, 610, 615, 620 and 625 correspond to the steps 405, 410, 415, 420 and 425 of the first method 400. In the alternative method 600, the further message gets a timestamp (e.g., from the local scheduler 101 or another timestamp service) and is persisted 627 in the local database 501. When the central scheduler 100 becomes available again after a restart, the persisted first, second and further messages are transferred 655 to the central scheduler according to one of the implementations described under FIG. 12. In case of a network interruption the central scheduler may still have the first and second messages registered in the corresponding queues and only the further message needs to be transferred from the local data base to the central scheduler. The transferred messages get registered in the corresponding queues of the central scheduler 100 according to their original timestamps. In other words, the central scheduler 100 merges 660 the transferred messages with other messages, such as, for example, the third message that has been received 640 and registered 650 since the central scheduler's restart 635.
When the central scheduler 100 restarts 435, 635 after a break down it can generate a restart timestamp for itself. Each message that is received by the central scheduler after the restart receives a timestamp that is younger than the restart timestamp. The central scheduler knows that only messages need to be transferred 455, 655 that have a timestamp that is older than the restart timestamp. The central scheduler 100 merges 460, 660 the transferred messages with other messages that may have been received after the restart timestamp according to their timestamps.
Once the central scheduler 100 is in sync with the local systems, the resolution of logical dependencies is executed by identifying 465, 665 the logical dependencies and releasing 470, 670 the messages as described under FIGs. 6 to 11.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the scheduler described above, can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.
Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).
Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.
To provide for interaction with a user, the invention can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.
The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.
The computing system can include clients and servers. A client and server are generally remote from each other and typically interact through a communication network. The relationship of client and server arises by virtue of computer programs running on the respective computers and having a client-server relationship to each other.

## Claims

1. A computer program product (100) configured to process messages of at least one of a plurality of computer systems (900, 901, 902, 903) in a further computer system (900) of the plurality of computer systems (900, 901, 902, 903), the computer program product having a plurality of instructions that when loaded into a memory (910) of the further computer system (900) cause at least one processor of the further computer system (900) to execute the following steps:
receiving (405) a first message (301, 310) from one of the plurality of computer systems (901);
registering (415) the first message (301, 310) in a first queue (Q1, M2);
receiving (420) a second message (302, 320) from one of the plurality of computer systems (901), the second message (302, 320) having a logical dependency on the first message (301, 310);
registering (430) the second message (302, 320) in a second queue (Q2, M3) and in the first queue (Q1, M2), wherein the queue entry of the second message (302-2, Cr/CO2) in the first queue (Q1, M2) occurs after the queue entry of the first message (301-1, Cr/CO1) in the first queue (Q1, M2);
identifying (465) the logical dependency of the second message (302, 320) on the first message (301, 310) by the order of the corresponding queue entries (301-1, 302-2, Cr/CO1, Cr/CO2) in the first queue (Q1, M2); and
releasing (470) the first message (301, 310) for processing before releasing the second message (302, 320) according to the logical dependency.

2. The computer program product of claim 1, configured to cause the at least one processor to execute the further steps:
receiving (440) a third message (340) from one of the plurality of computer systems after having received the first and second messages (310, 320), the third message (340) being logically independent from the first and second messages (310, 320);
registering (450) the third message (302, 320) in a third queue (M4); and
releasing (470) the third message (340) for processing before the second message (320).

3. The computer program product of claim 2 configured to cause a further processor of the further computer system (900) to release (470) the third message (340) to be processed in parallel with the first message (310).

4. The computer program product of any one of the previous claims, wherein the registering steps (415, 430, 450) provide a unique timestamp for each received message and the queue entries are registered strictly monotonous over time according to the timestamp of the corresponding message.

5. The computer program product of any one of the previous claims, wherein the identifying step (465) uses a topological sort algorithm to identify the logical dependency between the first and second messages (301, 310, 302, 320) within the first queue (Q1, M2).

6. The computer program product of claim 5, wherein the topological sort algorithm is applied to further queues to which a message has registered to identify further logical dependencies.

7. The computer program product of any one of the previous claims, wherein the logical dependency is defined by an object that is affected when the first message is processed and is affected when the second message is processed.

8. The computer program product of any one of the previous claims comprising further instructions that cause the at least one processor to execute the steps of:
after a restart (435) of the computer program, receiving a plurality of persisted messages from persistence means (500, 501) that corresponds to the plurality of messages registered before the restart (435); and
merging (460) the plurality of the persisted messages with messages that are already registered in corresponding queues after the restart (435) by registering the persisted messages in the corresponding queues so that all logical dependencies are taken into account.

9. A method (400) for processing messages of at least one of a plurality of computer systems (900, 901, 902, 903) in a further computer system (900) of the plurality of computer systems (900, 901, 902, 903), comprising the steps:
receiving (405) a first message (301, 310) from one of the plurality of computer systems (901);
registering (415) the first message (301, 310) in a first queue (Q1, M2);
receiving (420) a second message (302, 320) from one of the plurality of computer systems (901), the second message (302, 320) having a logical dependency on the first message (301, 310);
registering (430) the second message (302, 320) in a second queue (Q2, M3) and in the first queue (Q1, M2), wherein the queue entry of the second message (302-2, Cr/CO2) in the first queue (Q1, M2) occurs after the queue entry of the first message (301-1, Cr/CO1) in the first queue (Q1, M2);
identifying (465) the logical dependency of the second message (302, 320) on the first message (301, 310) by the order of the corresponding queue entries (301-1, 302-2, Cr/CO1, Cr/CO2) in the first queue (Q1, M2); and
releasing (470) the first message (301, 310) for processing before releasing the second message (302, 320) according to the logical dependency.

10. The method of claim 9 comprising the further steps:
receiving (440) a third message (340) from one of the plurality of computer systems after having received the first and second messages (310, 320), the third message (340) being logically independent from the first and second messages (310, 320);
registering (450) the third message (302, 320) in a third queue (M4); and
releasing (470) the third message (340) for processing before the second message (320).

11. The method of claim 10, wherein the third message (340) is released (470) before the second message (320) to be processed in parallel with the first message (310).

12. The method of any one of the claims 9 to 11, wherein the registering steps (415, 430, 450) provide a unique timestamp for each received message and the queue entries are registered strictly monotonous over time according to the timestamp of the corresponding message.

13. The method of any one of the claims 9 to 12, wherein the identifying step (465) uses a topological sort algorithm to identify the logical dependency between the first and second messages (301, 310, 302, 320) within the first queue (Q1, M2).

14. The method of claim 13, wherein the topological sort algorithm is applied to further queues to which a message has registered to identify further logical dependencies.

15. The method of any one of the claims 9 to 14, wherein the logical dependency is defined by an object that is affected when the first message is processed and is affected when the second message is processed.

16. The method of any one of the claims comprising 9 to 15 comprising the further steps of:
restarting (435) a computer program that already has performed the receiving message and registering message steps for a plurality of messages;
receiving from persistence means (500, 501) a plurality of persisted messages that corresponds to the plurality of messages that were registered before the restarting step (435); and
merging (460) the plurality of the persisted messages with messages that are already registered in corresponding queues after the restarting step (435) by registering the persisted messages in the corresponding queues so that all logical dependencies are taken into account.

17. A computer system (900) configured to process messages of at least one of a plurality of computer systems (900, 901, 902, 903), comprising:
a memory (910) storing a computer program (100) according to any one of the claims 1 to 8; and
at least one processor configured to execute the computer program (100).
